# FASCICULE DE BREVET EUROPEEN

(11) **EP 4 034 394 B1**
(45) Date de publication et mention de la délivrance du brevet: **09.10.2024**
(21) Numéro de dépôt: 20790374.1
(22) Date de dépôt: 24.09.2020
(51) Int. Cl.: B60H 1/00, B60H 1/32, B60H 1/22, F25B 30/02, F25B 5/04, F25B 25/00, H01M 10/625, H01M 10/66

(54) **DISPOSITIF DE GESTION THERMIQUE D'UN VÉHICULE AUTOMOBILE ÉLECTRIQUE OU HYBRIDE COMPORTANT UN CIRCUIT DE FLUIDE CALOPORTEUR**
VORRICHTUNG ZUM THERMISCHEN MANAGEMENT EINES ELEKTRO- ODER HYBRIDFAHRZEUGS MIT WÄRMEÜBERTRAGENDEM FLÜSSIGKEITSKREISLAUF
DEVICE FOR THE THERMAL MANAGEMENT OF AN ELECTRIC OR HYBRID MOTOR VEHICLE COMPRISING A HEAT-TRANSFER FLUID CIRCUIT

(30) Priorité: 26.09.2019 FR 1910671
(43) Date de publication de la demande: 03.08.2022
(73) Titulaire: VALEO SYSTEMES THERMIQUES, 78320 Le Mesnil Saint-Denis (FR)
(72) Inventeur: YAHIA, Mohamed, 78320 Le Mesnil Saint-Denis (FR); NICOLAS, Bertrand, 78320 Le Mesnil Saint-Denis (FR)
(74) Mandataire: Valeo Systèmes Thermiques
(86) Numéro de dépôt international: PCT/FR2020/051667
(87) Numéro de publication internationale: WO 2021/058915

(56) Documents cités:
- WO-A1-2015/010907
- WO-A1-2019/106258
- FR-A1- 2 995 669
- US-A1- 2005 133 215
- US-A1- 2018 319 246

## Description

L'invention se rapporte au domaine des véhicules automobiles électriques ou hybrides et plus particulièrement à un dispositif de gestion thermique de l'habitacle et des batteries.

Les véhicules automobiles électriques ou hybrides actuels comportent de plus en plus souvent un circuit de fluide caloporteur afin de gérer thermiquement les batteries. En effet, afin qu'elles soient les plus efficaces possible, ces batteries doivent rester à une température optimale de fonctionnement. Il est donc nécessaire de les refroidir en utilisation pour ne pas qu'elles dépassent excessivement cette température optimale de fonctionnement. De même, il peut également être nécessaire de chauffer ces batteries, par exemple par temps froid, afin qu'elles atteignent dans un délai le plus court possible cette température optimale de fonctionnement.

Il est ainsi connu que le circuit de fluide caloporteur comporte un échangeur de chaleur comme un radiateur afin de dissiper de l'énergie calorifique des batteries dans par exemple l'air extérieur et également d'ajouter un élément de chauffage électrique afin de chauffer le fluide caloporteur en cas de besoin.

Cependant, une telle construction peut être énergivore notamment en électricité si le véhicule automobile comporte d'autres circuits de gestion thermique comme par exemple afin de chauffer l'air de l'habitacle ou même un circuit de climatisation inversible ou non.

FR2995669, US2018319246 et US2005133215 illustrent des dispositifs selon l'arrière-plan technologique.

Un des buts de la présente invention est donc de remédier au moins partiellement aux inconvénients de l'art antérieur et de proposer un dispositif de gestion thermique amélioré.

La présente invention concerne donc un dispositif de gestion thermique l'objet de la revendication 1.

D'autres aspects de l'invention concernent les objets des revendications 2 à 6.

D'autres caractéristiques et avantages de la présente invention apparaîtront plus clairement à la lecture de la description suivante, fournie à titre illustratif et non limitatif, et des dessins annexés dans lesquels :
La figure 1 est une représentation schématique d'un dispositif de gestion thermique qui n'est pas selon l'invention,
La figure 2 est une représentation schématique du dispositif de gestion thermique de la figure 1 selon un premier mode de fonctionnement,
La figure 3 est une représentation schématique du dispositif de gestion thermique de la figure 1 selon un deuxième mode de fonctionnement,
La figure 4 est une représentation schématique d'un dispositif de gestion thermique selon l'invention,
La figure 5 est une représentation schématique du dispositif de gestion thermique de la figure 4 selon un troisième mode de fonctionnement,
La figure 6 est une représentation schématique du dispositif de gestion thermique de la figure 4 selon un quatrième mode de fonctionnement,
La figure 7 est une représentation schématique du dispositif de gestion thermique de la figure 4 selon un cinquième mode de fonctionnement,
La figure 8 est une représentation schématique du dispositif de gestion thermique de la figure 4 selon un sixième mode de fonctionnement,
La figure 9 est une représentation schématique du dispositif de gestion thermique de la figure 4 selon un septième mode de fonctionnement,
La figure 10 est une représentation schématique du dispositif de gestion thermique de la figure 4 selon un huitième mode de fonctionnement,
La figure 11 est une représentation schématique du dispositif de gestion thermique de la figure 4 selon un neuvième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

Premier mode de réalisation :

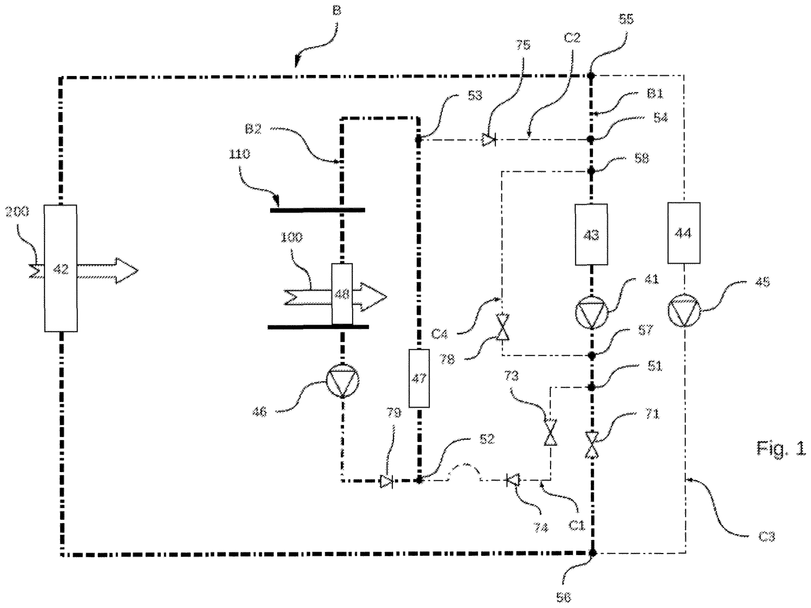

La figure 1 montre un dispositif de gestion thermique 1 d'un véhicule automobile électrique ou hybride qui n'est pas selon l'invention. Ce dispositif de gestion thermique 1 comporte notamment un circuit de fluide caloporteur B à l'intérieur duquel est destiné à circuler un fluide caloporteur.

Ce circuit de fluide caloporteur B comporte une première boucle B1 représentée en trait plus épais. Cette première boucle B1 comporte une première pompe 41, un premier échangeur de chaleur 42 et un deuxième échangeur de chaleur 43. Le premier échangeur de chaleur 42 est plus particulièrement destiné à être traversé par un flux d'air externe 200. Le deuxième échanger de chaleur 43 est quant à lui disposé au niveau de batteries du véhicule automobile électrique ou hybride afin de permettre la gestion de la température de ces dernières.

La première boucle B1 comporte en outre une deuxième boucle B2 également représentée en trait plus épais. Cette deuxième boucle B2 comporte une deuxième pompe 46, un troisième échangeur de chaleur 48 et un élément électrique chauffant 47 du fluide caloporteur. Le troisième échangeur de chaleur 48 est destiné à être traversé par un flux d'air interne 100 par exemple en étant placé au sein d'un dispositif de chauffage, ventilation et d'air conditionné 110 (appelé également selon l'acronyme anglais HVAC).

De plus, la première boucle B1 comporte une première conduite de dérivation C1 reliant un premier point de raccordement 51 avec un deuxième point de raccordement 52. Le premier point de raccordement 51 est disposé sur la première boucle B1 en aval du deuxième échangeur de chaleur 43. Plus précisément, le premier point de raccordement 51 est ici disposé entre le deuxième échangeur de chaleur 43 et le premier échangeur de chaleur 42. le deuxième point de raccordement 52 est quant à lui disposé sur la deuxième boucle B2 en amont de l'élément électrique chauffant 47 plus précisément entre le troisième échangeur de chaleur 48 et ledit élément électrique chauffant 47. Cette première conduite de dérivation C1 peut notamment comporter une vanne anti-retour 74 disposée de telle sorte que le fluide caloporteur ne peut circuler que depuis le premier point de raccordement 51 vers le deuxième point de raccordement 52.

La première boucle B1 comporte en outre une deuxième conduite de dérivation C2 reliant un troisième point de raccordement 53 avec un quatrième point de raccordement 54. Le troisième point de raccordement 53 est disposé sur la deuxième boucle B2 en aval de l'élément électrique chauffant 47, plus précisément entre ledit élément électrique chauffant 47 et le troisième échangeur de chaleur 48. Le quatrième point de raccordement 54 est quant à lui disposé sur la première boucle B1 en amont du deuxième échangeur de chaleur 43. Plus précisément, le quatrième point de raccordement 54 est ici disposé entre le premier 42 et le deuxième 43 échangeur de chaleur.

Cette deuxième conduite de dérivation C2 peut notamment comporter une vanne anti-retour 75 disposée de telle sorte que le fluide caloporteur ne peut circuler que depuis le troisième point de raccordement 53 vers le quatrième point de raccordement 54. Comme le montre toujours la figure 1, la première pompe 41 est disposée sur la première boucle B1 entre le quatrième 54 et le premier 51 point de raccordement. La première pompe 41 peut notamment être disposée indifféremment en amont ou en aval du deuxième échangeur de chaleur 43 entre ces deux points de raccordement 54, 51. La deuxième pompe 46 est quant à elle disposée sur la deuxième boucle B2 entre le troisième 53 et le deuxième 52 point de raccordement. La deuxième pompe 46 peut être disposée indifféremment en amont ou en aval du troisième échangeur de chaleur 48 entre ces deux points de raccordement 53, 52.

La deuxième boucle B2 peut également comporter une vanne anti-retour 79 disposée en amont du deuxième point de raccordement, plus précisément entre le troisième échangeur de chaleur 47 et ledit deuxième point de raccordement 52. Cette vanne anti-retour 79 est notamment disposée de sorte que le fluide caloporteur en provenance de la première conduite de dérivation C1 ne puisse pas remonter directement vers le troisième échangeur de chaleur 48 mais soit redirigé vers l'élément électrique chauffant 47.

Cette architecture particulière du circuit de fluide caloporteur B permet notamment un mode de fonctionnement, décrit plus en détail plus loin dans la présente description, dans lequel les batteries peuvent être réchauffées au moyen de l'élément électrique chauffant 47.

Toujours comme le montre la figure 1, le circuit de fluide caloporteur B peut notamment comporter un premier dispositif de contrôle de circulation du fluide caloporteur de la première boucle B1 vers la deuxième boucle B2 via la première conduite de dérivation C1. Ce premier dispositif de contrôle peut notamment comporter deux vannes d'arrêt 71 et 73. Une première vanne d'arrêt 71 est disposée sur la première boucle B1 en aval du premier point de raccordement 51 et une deuxième vanne d'arrêt 73 est disposée sur la première conduite de dérivation C1, entre le premier point de raccordement 51 et le clapet anti-retour 74. Le clapet anti-retour 74 a ici un intérêt particulier car il permet l'utilisation d'une deuxième vanne d'arrêt 73 non bidirectionnelle et donc moins coûteuse.

Il est bien entendu tout à fait possible d'imaginer un premier dispositif de contrôle différent comme par exemple une vanne trois-voies disposée au niveau du premier point de raccordement.

Le circuit de fluide caloporteur B peut également comporter une troisième conduite de dérivation C3 reliant un cinquième point de raccordement 55 avec un sixième point de raccordement 56. Le cinquième point de raccordement 55 est notamment disposé sur la première boucle B1 en amont du quatrième point de raccordement 54, plus précisément entre le premier échangeur de chaleur 42 et ledit quatrième point de raccordement 54. Le sixième point de raccordement 56 est quant à lui disposé sur la première boucle B1 en aval du premier point de raccordement 51, plus précisément entre ledit premier point de raccordement 51 et le premier échangeur de chaleur 42.

Cette troisième conduite de dérivation C3 comporte également un quatrième échangeur de chaleur 44 disposé au niveau d'éléments tels qu'un moteur électrique et/ou de l'électronique de puissance ainsi qu'une troisième pompe 45.

Le circuit de fluide caloporteur B comporte en outre une quatrième conduite de dérivation C4 reliant un septième point de raccordement 57 avec un huitième point de raccordement 58. Le septième point de raccordement 57 est notamment disposé sur la première boucle B1 en aval du deuxième échangeur de chaleur 43. Ici ce septième point de raccordement 57 est disposé entre le deuxième échangeur de chaleur 43 et le premier point de raccordement 51. Le huitième point de raccordement 58 est quant à lui disposé sur la première boucle B1 en amont du deuxième échangeur de chaleur 43. Ici, ce huitième point de raccordement 58 est disposé entre le quatrième point de raccordement 54 et le deuxième échangeur de chaleur 43.

La première pompe 41 est disposée de telle sorte à être entre le septième 57 et le huitième 58 point de raccordement.

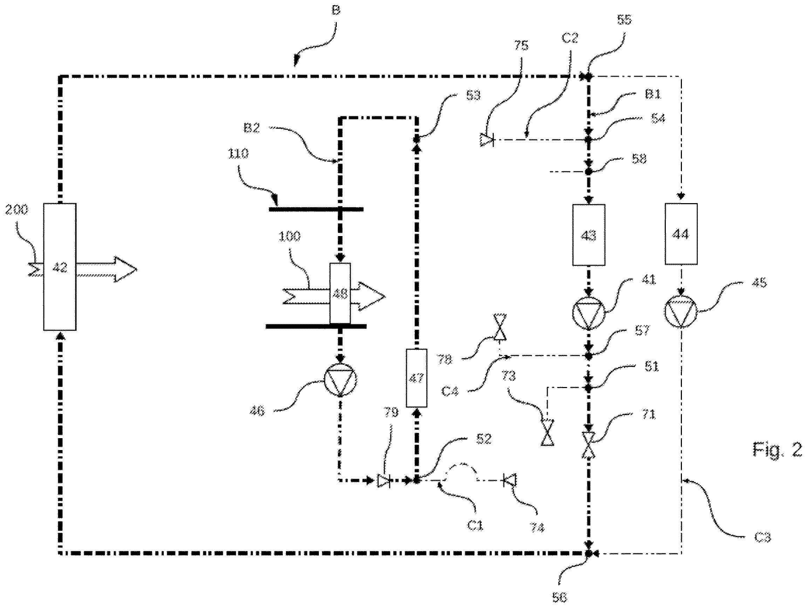

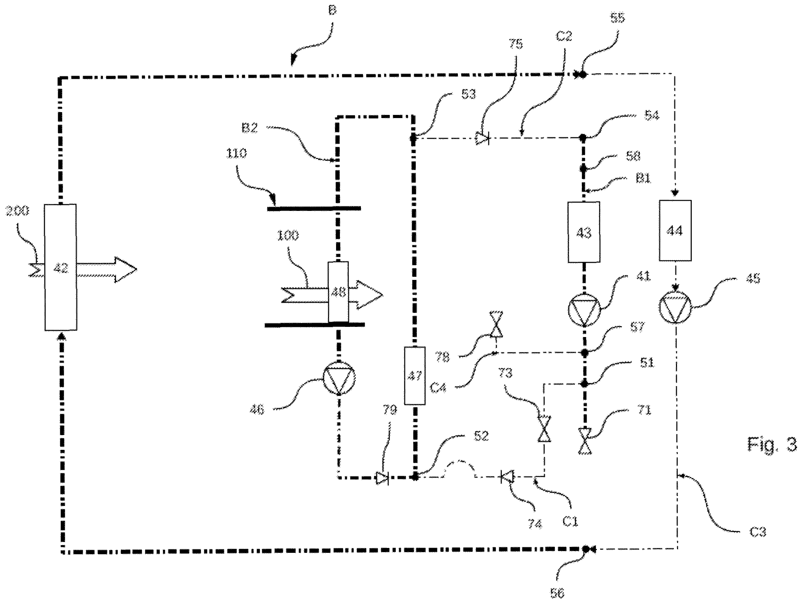

Le circuit de fluide caloporteur B peut également comporter un deuxième dispositif de contrôle de circulation du fluide caloporteur de la première boucle B1 vers la quatrième conduite de dérivation C4. Ce deuxième dispositif de contrôle peut notamment comporter une vanne d'arrêt 78 disposée sur la quatrième conduite de dérivation. Grâce à cette architecture, le dispositif de gestion thermique 1 selon ce premier mode de réalisation peut fonctionner selon différents modes de fonctionnement illustrés aux figures 2 et 3.

Premier mode de fonctionnement :
La figure 2 montre par exemple un mode de fonctionnement dans lequel la deuxième boucle B2 est isolée du reste du circuit de fluide caloporteur B. Pour cela, la deuxième vanne d'arrêt 73 du premier dispositif de contrôle est par exemple fermée de sorte que le fluide caloporteur ne circule pas dans la première conduite de circulation C1. La deuxième pompe 46 est alors en fonctionnement pour que le fluide caloporteur circule dans la deuxième boucle B2 et réchauffe le flux d'air interne 100 via le troisième échangeur de chaleur 48 et l'élément électrique chauffant 47 qui est actionné pour réchauffer ledit fluide caloporteur.

Toujours selon la figure 2, le fluide caloporteur peut également circuler dans la première boucle B1 indépendamment de la deuxième boucle B2. Pour cela, la deuxième vanne d'arrêt 73 du premier dispositif de contrôle est par exemple fermée de sorte que le fluide caloporteur ne circule pas dans la première conduite de circulation C1 et la première vanne d'arrêt 71 est ouverte. La première pompe 41 est alors en fonctionnement pour que le fluide caloporteur circule dans la première boucle B1 et dissipe de l'énergie calorifique dans le flux d'air externe 200 via le premier échangeur de chaleur 42. Cette énergie calorifique ayant été absorbée au niveau du deuxième échangeur de chaleur 43 en refroidissant les batteries.

Si la troisième pompe 45 est en fonctionnement, comme illustré sur la figure 2, de l'énergie calorifique, absorbée au niveau du quatrième échangeur de chaleur 44 pour refroidir des éléments tels qu'un moteur électrique et/ou de l'électronique de puissance, peut également être dissipée dans le flux d'air externe 200 via le premier échangeur de chaleur 42. Pour cela, au niveau du cinquième point de raccordement 55, une partie du fluide caloporteur rejoint le deuxième échangeur de chaleur 43 et une autre partie passe dans la troisième conduite de dérivation C3. Les deux parties de fluide caloporteur se rejoignent au niveau du sixième point de raccordement 56.

La première B1 et la deuxième B2 boucle peuvent ainsi fonctionner indépendamment selon les besoins. Il est même possible d'imaginer un mode de fonctionnement dans lequel la première pompe 41 est à l'arrêt ou alors dans lequel la première vanne d'arrêt 71 est fermée de sorte que le fluide caloporteur mis en mouvement par la première pompe 41 ne rejoigne pas le sixième point de raccordement 56 (comme illustré à la figure 3). Dans ce mode de fonctionnement, la troisième pompe 45 fonctionne. De sorte que l'énergie calorifique absorbée au niveau du quatrième échangeur de chaleur 44 sera dissipée au niveau du premier échangeur de chaleur 42.

Deuxième mode de fonctionnement :
La figure 3 montre un deuxième mode de fonctionnement dans lequel l'élément électrique chauffant 47 est utilisé pour chauffer le fluide caloporteur et ensuite réchauffer le flux d'air interne 100 au niveau du troisième échangeur de chaleur 48 et également réchauffer les batteries au niveau du deuxième échangeur de chaleur 43. Pour cela les première 41 et deuxième 46 pompes sont en fonctionnement. La première vanne d'arrêt 71 est fermée et la deuxième vanne d'arrêt 73 est ouverte de sorte que le fluide caloporteur mis en mouvement par la première pompe 41 passe par la première conduite de dérivation C1 et rejoint le fluide caloporteur mis en mouvement par la deuxième pompe au niveau du deuxième point de raccordement 52. Le fluide caloporteur passe dans l'élément électrique chauffant 47 où il est chauffé et est ensuite redistribué vers le troisième échangeur de chaleur 48 et vers le deuxième échangeur de chaleur 43 via la deuxième conduite de dérivation C2.

Dans le cas où le circuit de fluide caloporteur B comporte une troisième conduite de dérivation C3, le fluide caloporteur peut circuler dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Il est également possible d'imaginer un mode de fonctionnement (non représenté) dans lequel le fluide caloporteur mis en mouvement par la première pompe 41 ne fait que circuler dans la quatrième conduite de dérivation C4 et au niveau du deuxième échangeur de chaleur 43. Pour cela, les première 71 et deuxième 73 vannes d'arrêt du premier dispositif de contrôle sont fermées et la vanne d'arrêt 78 du deuxième dispositif de contrôle est ouverte. Ce mode de fonctionnement particulier permet une homogénéisation de la température au niveau des batteries et permet ainsi d'éviter la formation de points chauds.

Mode de réalisation selon l'invention :

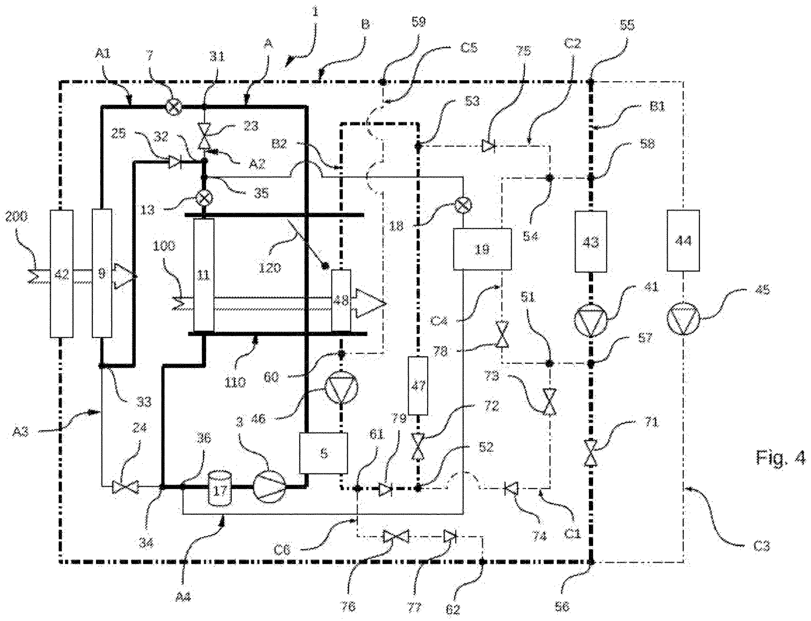

La figure 4 montre un dispositif de gestion thermique 1 selon l'invention. Dans ce mode de réalisation, on retrouve un circuit de fluide caloporteur B similaire à celui décrit précédemment. Le dispositif de gestion thermique 1 comporte en outre un circuit de fluide réfrigérant A à l'intérieur duquel est destiné à circuler un fluide réfrigérant. Le circuit de fluide réfrigérant A et et le circuit de fluide caloporteur B sont notamment en communication thermique au moyen d'un évaporateur bifluide 19 disposé conjointement sur le circuit de fluide réfrigérant A et sur le circuit de fluide caloporteur B au niveau la quatrième conduite de dérivation C4. Cet évaporateur bifluide 19 permet notamment d'absorber de l'énergie calorifique du fluide caloporteur vers le fluide réfrigérant afin de refroidir les batteries au niveau du deuxième échangeur de chaleur 43. Cet aspect sera décrit plus en détail plus loin dans la description.

Le dispositif de gestion thermique 1 comporte également un condenseur bifluide 5 disposé conjointement sur le circuit de fluide réfrigérant A et sur le circuit de fluide caloporteur B au niveau de la deuxième boucle B2, entre le troisième échangeur de chaleur 48 et le deuxième point de raccordement 52. Ce condenseur bifluide 5 permet notamment d'absorber de l'énergie calorifique du fluide réfrigérant vers le fluide caloporteur afin de réchauffer ledit fluide caloporteur, par exemple pour aider au chauffage du flux d'air interne 100 au niveau du troisième échangeur de chaleur 48. Cet aspect sera décrit plus en détail plus loin dans la description.

Comme le montre la figure 4, le circuit de fluide réfrigérant A peut notamment être un circuit de climatisation inversible comportant un évaporateur 11 destiné à être traversé par un flux d'air interne 100 connecté en parallèle de l'évaporateur bifluide 19. Cet évaporateur 11 peut être disposé au sein du dispositif de chauffage, ventilation et d'air conditionné 110, par exemple en amont du troisième échangeur de chaleur 48 dans le sens du flux d'air interne 100. Le dispositif de chauffage, ventilation et d'air conditionné 110 peut également comporter un volet 120 afin de permettre ou non le passage du flux d'air interne 100 au sein du troisième échangeur de chaleur 48.

Le circuit de fluide réfrigérant A peut ainsi comporter une branche principale A1, représentée en trait gras, comportant dans le sens de circulation du fluide réfrigérant un compresseur 3, le condenseur bifluide 5, un premier dispositif de détente 7, un évapo-condenseur 9 destiné à être disposé dans un flux d'air externe 200, un deuxième dispositif de détente 13 et l'évaporateur 11. La branche principale peut également comporter un dispositif de séparation de phase 17 du fluide réfrigérant disposé en amont du compresseur 3.

Par inversible, on entend que le circuit de fluide réfrigérant 1 est apte à pouvoir refroidir le flux d'air interne 100 ou le réchauffer selon les besoins. Le flux d'air interne 100 est notamment refroidi via l'évaporateur 11 dans un mode de refroidissement. L'énergie calorifique absorbée au niveau de l'évaporateur 11 est dissipée dans le flux d'air externe 200 au niveau de l'évapo-condenseur 9. Lors d'un mode de fonctionnement pompe à chaleur, le flux d'air interne 100 est réchauffé indirectement via le condenseur bifluide 5 qui permet la chauffe du fluide caloporteur. Le fluide caloporteur réchauffe ensuite le flux d'air interne 100 au niveau du troisième échangeur de chaleur 48. L'énergie calorifique permettant la chauffe du fluide caloporteur via le condenseur bifluide 5 est absorbée du flux d'air externe 200 via l'évapo-condenseur 9.

Afin d'être inversible et permettre plusieurs modes de fonctionnement, le circuit de fluide réfrigérant A illustré à la figure 4 comporte une première branche de dérivation A2 reliant un premier point de jonction 31 avec un deuxième point de jonction 32. Le premier point de jonction 31 est disposé sur la banche principale A1 en aval du condenseur bifluide 5, entre ledit condenseur bifluide 5 et le premier dispositif de détente 7. Le deuxième point de jonction 32 est quant à lui disposé sur la branche principale A1 en amont du deuxième dispositif de détente 13, entre l'évapo-condenseur 9 et ledit deuxième dispositif de détente 13. Cette première branche de dérivation A2 permet notamment de contourner le premier dispositif de détente 7 et l'évapo-condenseur 9. La première branche de dérivation A2 peut notamment comporter une vanne d'arrêt 23 afin de permettre ou non le passage du fluide réfrigérant en son sein. La branche principale A1 peut également comporter un clapet anti-retour 25 disposé en amont du deuxième point de jonction 32 configuré de sorte à bloquer un reflux de fluide réfrigérant en provenance du deuxième point de jonction 32 vers l'évapo-condenseur 9. Toujours afin d'être inversible et permettre plusieurs modes de fonctionnement, le circuit de fluide réfrigérant A illustré à la figure 4 comporte également une deuxième branche de dérivation A3 reliant un troisième point de jonction 33 avec un quatrième point de jonction 34. Le troisième point de jonction 33 est disposé sur la branche principale A1 en aval de l'évapo-condenseur 9, entre ledit évapo-condenseur 9 et le deuxième point de jonction 32. Plus précisément en amont du clapet anti-retour 25. Le quatrième point de raccordement 34 est quant à lui disposé en amont du compresseur 3, entre l'évaporateur 11 et ledit compresseur 3. La deuxième branche de dérivation A3 peut notamment comporter une vanne d'arrêt 24 afin de permettre ou non le passage du fluide réfrigérant en son sein.

Le premier dispositif de détente 7 peut être un dispositif de détente à diamètre d'ouverture variable permettant le passage du fluide réfrigérant sans perte de pression lorsqu'il est ouvert à son diamètre maximum. Une alternative peut également être que ce premier dispositif de détente 7 peut être contourné. Le premier 7 et le deuxième 13 dispositif de détente peuvent également comporter une fonction d'arrêt, c'est-à-dire qu'ils peuvent être configurés pour bloquer le passage du fluide réfrigérant.

Le circuit de fluide réfrigérant A illustré à la figure 4 comporte également une troisième branche de dérivation A4 comportant l'évaporateur bifluide 19. Cette troisième branche de dérivation A4 est notamment connectée en parallèle du deuxième dispositif de détente 13 et de l'évaporateur 11. Cette troisième branche de dérivation A4 relie un cinquième point de jonction 35 avec un sixième point de jonction 36. Le cinquième point de jonction 35 est disposé sur la branche principale A1 en amont du deuxième dispositif de détente 13, entre le deuxième point de jonction 32 et ledit deuxième dispositif de détente 13. Le sixième point de jonction 36 est quant à lui disposé sur la branche principale A1 en amont du compresseur 3, entre l'évaporateur 11 et ledit compresseur 3. La troisième branche de dérivation A4 comporte également un troisième dispositif de détente 18 disposé en amont de l'évaporateur bifluide 19. Ce troisième dispositif de détente 18 peut également comporter une fonction d'arrêt, c'est-à-dire qu'il peut être configuré pour bloquer le passage du fluide réfrigérant.

Le circuit de fluide réfrigérant A illustré à la figure 4 n'est qu'un exemple. Il est tout à fait possible d'imaginer un circuit de fluide réfrigérant inversible comportant un condenseur 5 et un évaporateur bifluide 19 ayant une architecture différente et tout autant compatible avec la présente invention.

Toujours selon la figure 4, lorsque le dispositif de gestion thermique 1 comporte un circuit de fluide réfrigérant A en liaison thermique avec un circuit de fluide caloporteur B, ledit circuit de fluide caloporteur B comporte en outre une cinquième conduite de dérivation C5 reliant un neuvième point de raccordement 59 avec un dixième point de raccordement 60. Le neuvième point de raccordement 59 est disposé sur la première boucle B1 en aval du premier échangeur de chaleur 42, entre le premier échangeur de chaleur 42 et le deuxième échangeur de chaleur 43. Le neuvième point de raccordement 59 est notamment disposé en amont du cinquième point de raccordement 55 lorsqu'une troisième conduite de dérivation C3 est présente. Le dixième point de raccordement 60 est quant à lui disposé sur la deuxième boucle B2 en aval du troisième échangeur de chaleur 48, entre ledit troisième échangeur de chaleur 48 et le condenseur 5.

Le circuit de fluide caloporteur B comporte également une sixième conduite de dérivation C6 reliant un onzième point de raccordement 61 avec un douzième point de raccordement 62. Le onzième point de raccordement 61 est disposé sur la deuxième boucle B2 en aval du condenseur bifluide 5, entre ledit condenseur 5 et le deuxième point de raccordement 52. Ce onzième point de raccordement 61 est notamment disposé en amont du clapet anti-retour 79. Le douzième point de raccordement 62 est quant à lui disposé sur la première boucle B1 en aval du deuxième échangeur de chaleur 43, entre ledit deuxième échangeur de chaleur 43 et le premier échangeur de chaleur 42. Le douzième point de raccordement 62 est notamment disposé en aval du sixième point de raccordement 56 lorsqu'une troisième conduite de dérivation C3 est présente. La sixième conduite de dérivation C6 peut comporter un clapet anti-retour 77 disposé de sorte à empêcher les reflux de fluide caloporteur en provenance du douzième point de raccordement 62 vers la deuxième boucle B2. De préférence, la deuxième pompe 46 est disposée en aval du dixième point de raccordement 60, entre ledit dixième point de raccordement 60 et le onzième point de raccordement 61.

Le circuit de fluide caloporteur B peut également comporter un troisième dispositif de contrôle de circulation du fluide caloporteur de la deuxième boucle B2 vers la première boucle B1 via la sixième conduite de dérivation C6. Ce troisième dispositif de contrôle peut comporter deux vannes d'arrêt 72, 76. La première vanne d'arrêt 72 est disposée sur la deuxième boucle B2 en amont de l'élément électrique chauffant 47, entre le deuxième point de raccordement 52 et ledit élément électrique chauffant 47. La deuxième vanne d'arrêt 76 est quant à elle disposée sur la sixième conduite de dérivation C6 entre le onzième point de raccordement 61 et le clapet anti-retour 77. Le clapet anti-retour 77 a ici un intérêt particulier car il permet l'utilisation d'une deuxième vanne d'arrêt 76 non bidirectionnelle et donc moins coûteuse.

Dans l'exemple illustré à la figure 4, les premier 51 et quatrième 54 points de raccordement sont disposés sur la quatrième conduite de dérivation C4 respectivement en amont de la vanne d'arrêt 78 et en aval de l'évaporateur bifluide 19. Cela est équivalent à ce qu'ils soient disposés directement sur la première boucle B1 comme illustré dans le premier mode de réalisation de la figure 1.

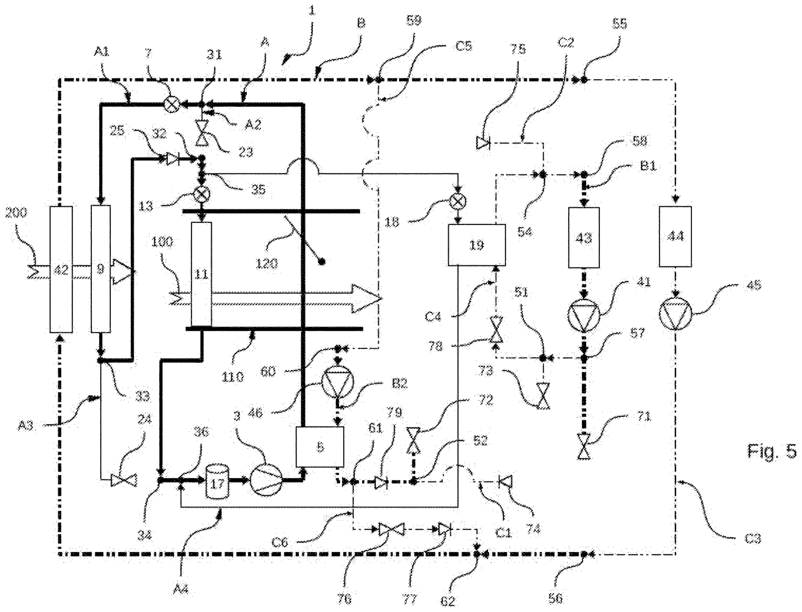

Le dispositif de gestion thermique 1 selon l'invention, illustré à la figure 4, peut ainsi fonctionner selon différents modes de fonctionnement illustré par les exemples des figures 5 à 11.

Troisième mode de fonctionnement :
La figure 5 montre un mode de fonctionnement dans lequel le circuit de fluide réfrigérant A est dans un mode de refroidissement simultané du flux d'air interne 100 via l'évaporateur 11 et du fluide caloporteur via l'évaporateur bifluide 19. Le fluide réfrigérant est tout d'abord comprimé au niveau du compresseur 3, passe dans le condenseur bifluide 5 au niveau duquel il subit une première perte d'énergie calorifique au profit du fluide caloporteur. Le fluide réfrigérant traverse le premier dispositif de détente 7 sans perte de pression et passe dans l'évapo-condenseur 9 au niveau duquel il cède une deuxième fois de l'énergie calorifique, ici au profit du flux d'air externe 200. La vanne d'arrêt 23 de la première branche de dérivation A2 est ici fermée. De même la vanne d'arrêt 24 de la deuxième branche de dérivation A3 est fermée. Le fluide réfrigérant rejoint ensuite le cinquième point de jonction 35.

Au niveau de ce cinquième point de jonction 35 une première portion de fluide réfrigérant rejoint le deuxième dispositif de détente 13 au niveau duquel il subit une perte de pression. Le fluide réfrigérant passe ensuite dans l'évaporateur 11 au niveau duquel il absorbe de l'énergie calorifique du flux d'air interne 100.

Toujours au niveau du cinquième point de jonction 35, une deuxième portion de fluide réfrigérant rejoint la troisième branche de dérivation A4 et le troisième dispositif de détente 18 au niveau duquel il subit une perte de pression. Le fluide réfrigérant passe ensuite dans l'évaporateur bifluide 19 au niveau duquel il absorbe de l'énergie calorifique du fluide caloporteur. Les deux portions de fluide réfrigérant se rejoignent au niveau du sixième point de jonction 36 avant de retourner vers le compresseur 3.

Au niveau du circuit de fluide caloporteur B, le fluide caloporteur circule selon deux chemins distincts. Selon un premier chemin, le fluide caloporteur est mis en mouvement par la deuxième pompe 46 de la deuxième boucle B2 et passe par le condenseur bifluide 5 au niveau duquel il récupère de l'énergie calorifique. Le fluide caloporteur passe ensuite dans la sixième conduite de dérivation C6 et rejoint le premier échangeur de chaleur 42 pour dissiper l'énergie calorifique. Le fluide réfrigérant retourne ensuite à la deuxième pompe 46 en passant par la cinquième conduite de dérivation C5. Pour cela, le troisième dispositif de contrôle est configuré de sorte à rediriger le fluide caloporteur de la deuxième boucle B2 vers la première boucle B1. Dans l'exemple illustré, la première vanne d'arrêt 72 du troisième dispositif de contrôle est fermée et sa deuxième vanne d'arrêt 76 est ouverte.

Dans le cas où le circuit de fluide caloporteur B comporte une troisième conduite de dérivation C3, le fluide caloporteur peut circuler en parallèle dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Selon un deuxième chemin, le fluide caloporteur est mis en mouvement par la première pompe 41 et circule uniquement entre le deuxième échangeur de chaleur 43 et l'évaporateur bifluide 19 de la quatrième conduite de dérivation C4. Le fluide caloporteur est refroidi par le fluide réfrigérant au niveau de l'évaporateur bifluide 19 et refroidi les batteries au niveau du deuxième échangeur de chaleur 43. Pour cela, le premier dispositif de contrôle bloque la circulation du fluide caloporteur par exemple en fermant ses première 71 et deuxième 73 vannes d'arrêt. La vanne d'arrêt 78 du deuxième dispositif de contrôle est quant à elle ouverte.

Selon ce troisième mode de fonctionnement, le condenseur bifluide 5 permet un premier refroidissement du fluide réfrigérant avant qu'il ne traverse l'évapo-condenseur 9. De plus, le fluide caloporteur chaud ne passe pas par le troisième échangeur de chaleur 48. Le flux d'air interne 100 est donc uniquement refroidi pas l'évaporateur 11 ce qui augmente les performances de refroidissement. Les batteries sont ici refroidies activement via le circuit de fluide réfrigérant A.

Quatrième mode de fonctionnement :

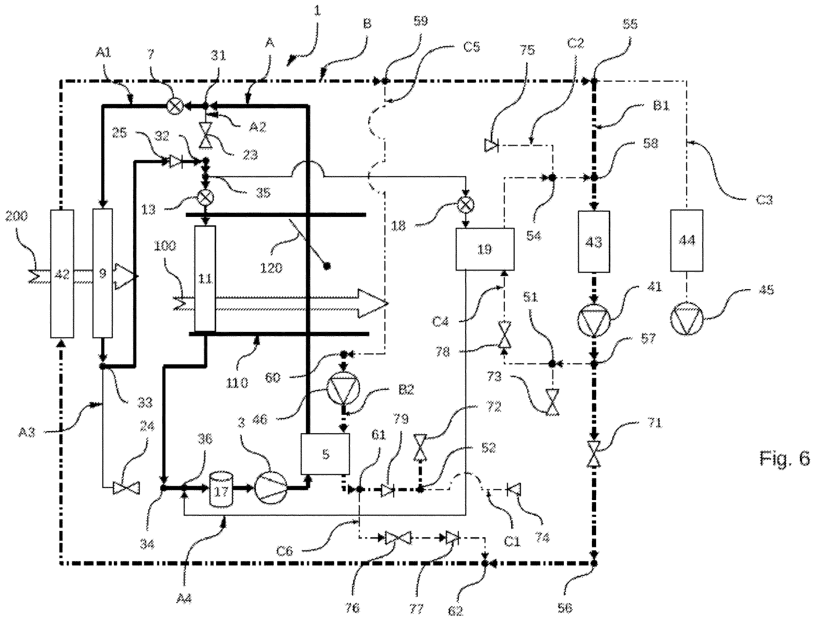

La figure 6 montre un mode de fonctionnement identique à celui de la figure 5 à la différence que le fluide caloporteur passant par le deuxième échangeur de chaleur 43 afin de refroidir les batteries, circule en parallèle :
dans la quatrième conduite de dérivation C4 et l'évaporateur bifluide 19 afin de refroidir activement les batteries, et
dans le premier échangeur de chaleur 42 afin de dissiper passivement l'énergie calorifique absorbée au niveau des batteries.

Le fait de combiner un refroidissement passif et actif permet une réduction de la consommation électrique pour le refroidissement. Ce mode de fonctionnement est particulièrement efficace pour des températures extérieures intermédiaires de l'ordre par exemple de 25°C.

Dans l'exemple illustré à la figure 6, la troisième conduite de dérivation C3 n'est pas active, par exemple par arrêt de la troisième pompe 45. Il est cependant tout à fait possible d'imaginer que cette dernière soit active et permette une dissipation de l'énergie calorifique absorbée au niveau du quatrième échangeur de chaleur 44 par le premier échangeur de chaleur 42.

Cinquième mode de fonctionnement :

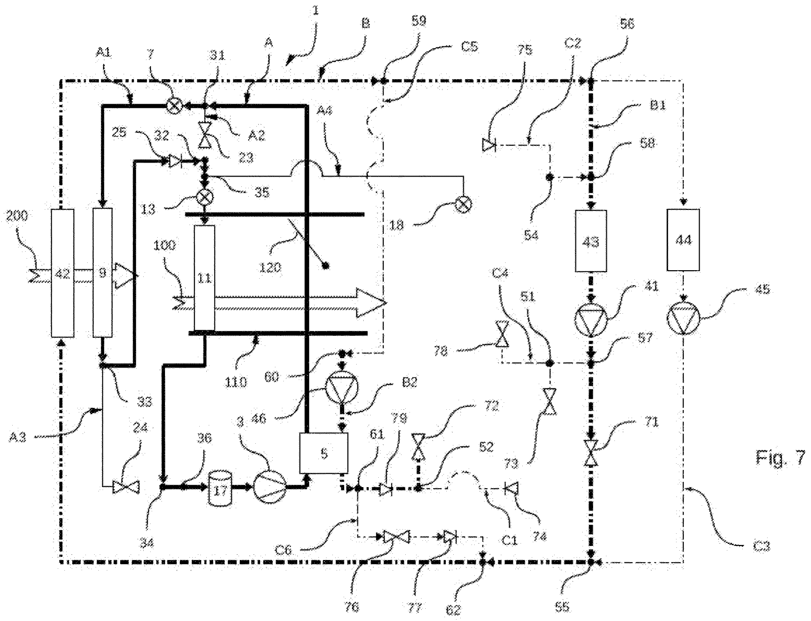

La figure 7 montre un mode de fonctionnement dans lequel le circuit de fluide réfrigérant A est dans un mode de refroidissement uniquement du flux d'air interne 100 via l'évaporateur 11. Le fluide réfrigérant est tout d'abord comprimé au niveau du compresseur 3, passe dans le condenseur bifluide 5 au niveau duquel il subit une première perte d'énergie calorifique au profit du fluide caloporteur. Le fluide réfrigérant traverse le premier dispositif de détente 7 sans perte de pression et passe dans l'évapo-condenseur 9 au niveau duquel il cède une deuxième fois de l'énergie calorifique ici au profit du flux d'air externe 200. La vanne d'arrêt 23 de la première branche de dérivation A2 est ici fermée. De même la vanne d'arrêt 24 de la deuxième branche de dérivation A3 est fermée. Le fluide réfrigérant rejoint ensuite le cinquième point de jonction 35.

Au niveau de ce cinquième point de jonction 35 le fluide réfrigérant rejoint le deuxième dispositif de détente 13 au niveau duquel il subit une perte de pression. Le fluide réfrigérant passe ensuite dans l'évaporateur 11 au niveau duquel il absorbe de l'énergie calorifique du flux d'air interne 100 avant de rejoindre le compresseur 3.

Au niveau du cinquième point de jonction 35, le fluide réfrigérant ne circule pas dans la troisième branche de dérivation A4 du fait par exemple que le troisième dispositif de détente 18 est fermé et bloque le fluide réfrigérant.

Concernant le circuit de fluide caloporteur B, ce dernier est configuré de sorte que le fluide caloporteur circule dans la première boucle B1. Le fluide caloporteur est donc mis en mouvement par la première pompe 41 et circule entre le premier échangeur de chaleur 42, au niveau duquel il dissipe de l'énergie calorifique dans le flux d'air externe 200, et le deuxième échangeur de chaleur 43, au niveau duquel le fluide caloporteur absorbe de l'énergie calorifique en refroidissant les batteries. Pour cela le premier dispositif de contrôle est configuré de sorte à bloquer le passage du fluide caloporteur entre la première B1 et la deuxième boucle B2. La première vanne d'arrêt 71 du premier dispositif de contrôle est donc ouverte et sa deuxième vanne d'arrêt 73 est fermée. La vanne d'arrêt 78 du deuxième dispositif de contrôle est également fermée.

Dans le cas où le circuit de fluide caloporteur B comporte une troisième conduite de dérivation C3, le fluide caloporteur peut circuler en parallèle dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Parallèlement à sa circulation dans la première boucle B1, le fluide caloporteur est également mis en mouvement par la deuxième pompe 46 de la deuxième boucle B2. Le fluide caloporteur passe par le condenseur bifluide 5 au niveau duquel il récupère de l'énergie calorifique. Le fluide caloporteur passe ensuite dans la sixième conduite de dérivation C6 et rejoint le premier échangeur de chaleur 42 pour dissiper l'énergie calorifique. Le fluide réfrigérant retourne ensuite à la deuxième pompe 46 en passant par la cinquième conduite de dérivation C5. Pour cela, le troisième dispositif de contrôle est configuré de sorte à rediriger le fluide caloporteur de la deuxième boucle B2 vers la première boucle B1. Dans l'exemple illustré, la première vanne d'arrêt 72 du troisième dispositif de contrôle est fermée et sa deuxième vanne d'arrêt 76 est ouverte.

Selon ce cinquième mode de fonctionnement, le condenseur bifluide 5 permet un premier refroidissement du fluide réfrigérant avant qu'il ne traverse l'évapo-condenseur 9. De plus, le fluide caloporteur chaud ne passe pas par le troisième échangeur de chaleur 48. Le flux d'air interne 100 est donc uniquement refroidi par l'évaporateur 11 ce qui augmente les performances de refroidissement. Les batteries sont ici refroidies passivement via le premier échangeur de chaleur 42.

Sixième mode de fonctionnement :

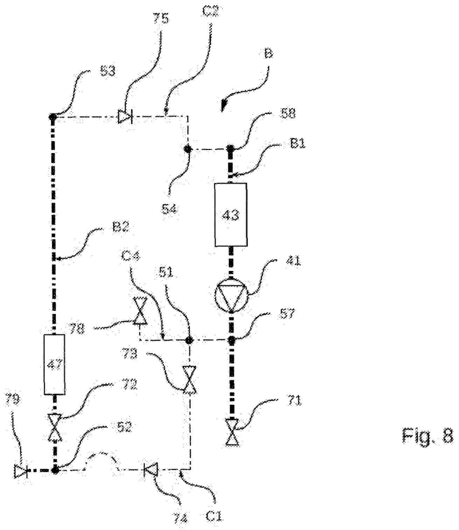

La figure 8 montre un mode de fonctionnement dans lequel les batteries sont réchauffées au moyen de l'élément électrique chauffant 47. Le circuit de fluide réfrigérant A est inactif et n'est donc pas représenté. Seul le circuit de fluide caloporteur B est actif.

Le fluide caloporteur est mis en mouvement par la première pompe 41 circule entre le deuxième échangeur de chaleur 43 et l'élément électrique chauffant 47. Le fluide caloporteur circule ainsi entre la première boucle B1 et la deuxième boucle B2 via la première C1 et la deuxième C2 conduite de dérivation. La vanne d'arrêt 78 du deuxième dispositif de contrôle est fermée pour que le fluide caloporteur ne circule pas dans la quatrième conduite de dérivation C4. Le premier dispositif de contrôle est configuré de sorte à permettre le passage du fluide caloporteur entre la première B1 et la deuxième boucle B2. Pour cela sa première vanne d'arrêt 71 est fermée et sa deuxième vanne d'arrêt 73 est ouverte. Le clapet anti-retour 79 empêche le reflux du fluide caloporteur vers le troisième échangeur de chaleur 48 (non représenté). Le troisième dispositif de contrôle est configuré de sorte à permettre la circulation du fluide caloporteur dans l'élément électrique chauffant 47. Pour cela sa première vanne 72 est ouverte.

La deuxième pompe 45 est inactive et le fluide caloporteur ne circule pas dans le troisième échangeur de chaleur 48 et le condenseur bifluide 5.

Septième mode de fonctionnement :

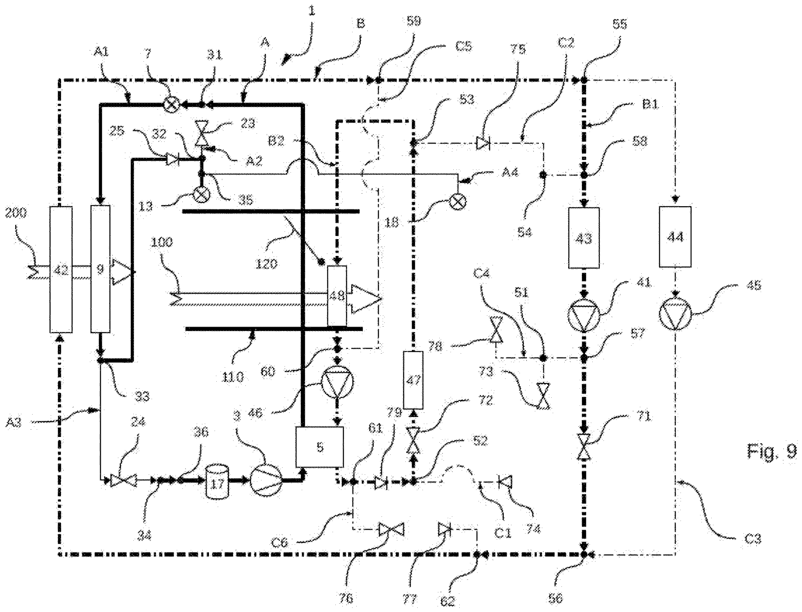

La figure 9 montre un mode de fonctionnement dans lequel le circuit de fluide réfrigérant est dans un mode pompe à chaleur. Dans ce mode pompe à chaleur le fluide réfrigérant absorbe de l'énergie calorifique au niveau de l'évapo-condenseur 9 et l'utilise pour réchauffer le fluide caloporteur au niveau du condenseur bifluide 5. Le fluide réfrigérant ne circule ainsi pas dans l'évaporateur 11, par exemple du fait que le deuxième dispositif de détente 13 est fermé et bloque le fluide réfrigérant. Dans l'exemple illustré à la figure 9, le fluide réfrigérant ne circule pas non plus dans la troisième branche de dérivation A4 par exemple du fait que le troisième dispositif de détente 18 est fermé et bloque le fluide réfrigérant. Le fluide réfrigérant ne circule pas non plus dans la première branche de dérivation A2 du fait de la fermeture de la vanne d'arrêt 23.

Le fluide réfrigérant est dans un premier temps comprimé au niveau du compresseur 3 et passe par le condenseur bifluide 5 au niveau duquel il cède de l'énergie calorifique au fluide caloporteur. Le fluide réfrigérant passe ensuite dans le premier dispositif de détente 7 au niveau duquel il subit une perte de pression. Le fluide réfrigérant traverse ensuite l'évapo-condenseur 9 en absorbant de l'énergie calorifique du flux d'air externe 200. Le fluide réfrigérant rejoint ensuite le compresseur 3 en passant par la deuxième branche de dérivation A3. Pour cela, sa vanne d'arrêt 24 est ouverte.

Concernant le circuit de fluide caloporteur B, ce dernier est configuré de sorte que la première B1 et la deuxième B2 boucle ne soient pas en communication fluidique l'une de l'autre. Le premier dispositif de contrôle est ainsi configuré de sorte à empêcher la circulation du fluide caloporteur dans la première conduite de dérivation C1, par exemple en fermant sa deuxième vanne d'arrêt 73. Le troisième dispositif de contrôle est quant à lui configuré pour empêcher la circulation du fluide caloporteur dans la sixième conduite de dérivation C6 et permettre sa circulation dans la première boucle B1. Pour cela, sa première vanne 72 est ouverte et sa deuxième vanne 76 est fermée. Au niveau de la deuxième boucle B2, le fluide caloporteur peut ainsi être mis en mouvement par la deuxième pompe 46 et circuler entre le condenseur bifluide 5 au niveau duquel il récupère de l'énergie calorifique, l'élément électrique chauffant où il peut continuer d'être réchauffé et le deuxième échangeur de chaleur 43 au niveau duquel il réchauffe le flux d'air interne 100.

Simultanément et indépendamment de sa circulation dans la deuxième boucle B2, le fluide caloporteur peut également circuler dans la première boucle B1. Le fluide caloporteur est mis en mouvement par la première pompe 41 et circule entre le premier échangeur de chaleur 42 au niveau duquel il dissipe de l'énergie calorifique dans le flux d'air externe 200 et le deuxième échangeur de chaleur 43 au niveau duquel le fluide caloporteur absorbe de l'énergie calorifique en refroidissant les batteries. Pour cela le premier dispositif de contrôle est configuré de sorte à bloquer le passage du fluide caloporteur entre la première B1 et la deuxième boucle B2. La première vanne d'arrêt 71 du premier dispositif de contrôle est donc ouverte et sa deuxième vanne d'arrêt 73 est fermée. La vanne d'arrêt 78 du deuxième dispositif de contrôle est également fermée.

Dans le cas où le circuit de fluide caloporteur B comporte une troisième conduite de dérivation C3, le fluide caloporteur peut circuler en parallèle dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Dans ce septième mode de fonctionnement, les batteries sont refroidies passivement via le premier échangeur de chaleur 42 et le flux d'air interne 100 est réchauffé activement via le circuit de fluide réfrigérant A et l'élément électrique chauffant 47.

Huitième mode de fonctionnement :

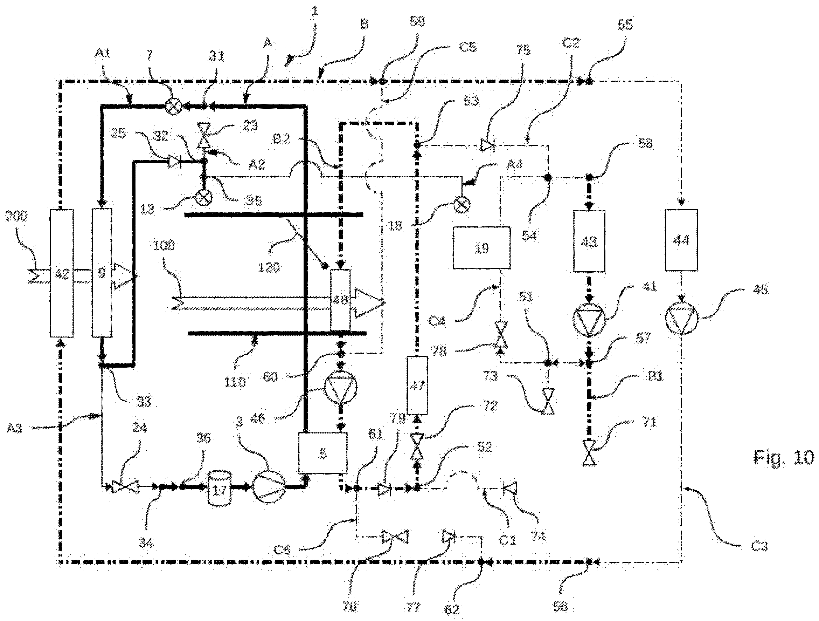

La figure 10 montre un mode de fonctionnement dans lequel, à l'instar de la figure 9, le circuit de fluide réfrigérant A est en mode pompe à chaleur. Le fluide réfrigérant ne circule pas non plus dans la troisième branche de dérivation A4 par exemple du fait que le troisième dispositif de détente 18 est fermé et bloque le fluide réfrigérant. Le cheminement du fluide réfrigérant est donc identique à celui du mode de fonctionnement de la figure 9.

Concernant le circuit de fluide caloporteur B, ce dernier est configuré de sorte que la première B1 et la deuxième B2 boucle ne soient pas en communication fluidique l'une de l'autre. Le premier dispositif de contrôle est ainsi configuré de sorte à empêcher la circulation du fluide caloporteur dans la première conduite de dérivation C1, par exemple en fermant sa deuxième vanne d'arrêt 73. Le troisième dispositif de contrôle est quant à lui configuré pour empêcher la circulation du fluide caloporteur dans la sixième conduite de dérivation C6 et permettre sa circulation dans la première boucle B1. Pour cela, sa première vanne 72 est ouverte et sa deuxième vanne 76 est fermée. Au niveau de la deuxième boucle B2, le fluide caloporteur peut ainsi être mis en mouvement par la deuxième pompe 46 et circuler entre le condenseur bifluide 5 au niveau duquel il récupère de l'énergie calorifique, l'élément électrique chauffant où il peut continuer d'être réchauffé et le deuxième échangeur de chaleur 43 au niveau duquel il réchauffe le flux d'air interne 100.

Simultanément et indépendamment de sa circulation dans la deuxième boucle B2, le fluide caloporteur peut également circuler dans la première boucle B1. Le fluide caloporteur est mis en mouvement par la première pompe 41 et circule entre le deuxième échangeur de chaleur 43 et l'évaporateur bifluide 19. Du fait que le fluide réfrigérant ne passe pas dans l'évaporateur bifluide 19, il n'y a pas d'échange d'énergie calorifique entre le fluide réfrigérant et le fluide caloporteur au niveau de cet évaporateur bifluide 19. Le fluide caloporteur ne fait alors que passer dans la quatrième conduite de dérivation C4 pour revenir au deuxième échangeur de chaleur 43. Pour cela le premier dispositif de contrôle est configuré de sorte à bloquer le passage du fluide caloporteur entre la première B1 et la deuxième boucle B2. La première 71 et la deuxième 73 vanne d'arrêt 71 du premier dispositif de contrôle sont fermées. La vanne d'arrêt 78 du deuxième dispositif de contrôle est quant à elle ouverte.

Dans le cas où le circuit de fluide caloporteur B comporte une troisième conduite de dérivation C3, le fluide caloporteur peut circuler dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Dans ce huitième mode de fonctionnement, la température des batteries est homogénéisée via le passage dans la quatrième conduite de dérivation C4. Le flux d'air interne 100 est réchauffé activement via le circuit de fluide réfrigérant A et l'élément électrique chauffant 47.

Neuvième mode de fonctionnement:

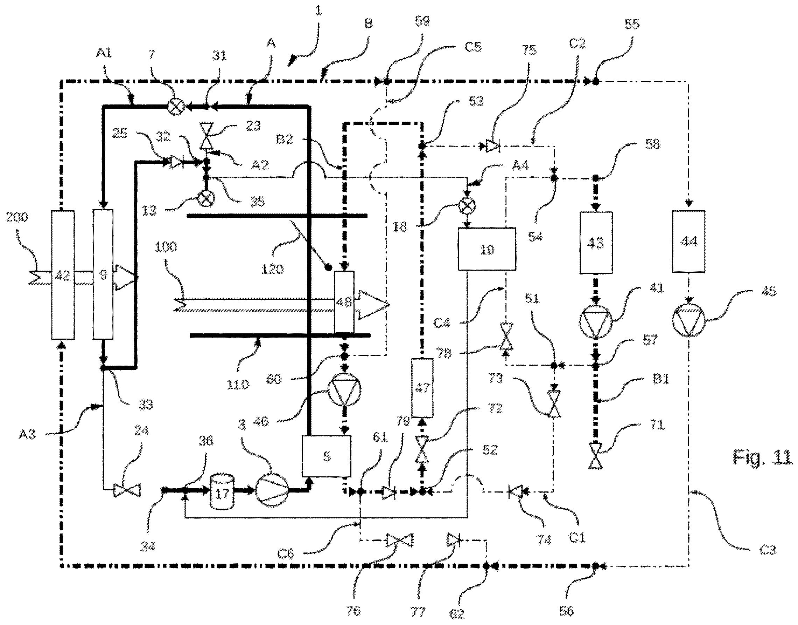

La figure 11 montre un mode de fonctionnement dans lequel le circuit de fluide réfrigérant est dans un mode pompe à chaleur particulier. Dans ce mode pompe à chaleur le fluide réfrigérant absorbe de l'énergie calorifique au niveau de l'évapo-condenseur 9 ainsi qu'au niveau de l'évaporateur bifluide 19. Cette énergie calorifique est utilisée pour parvenir à un fluide réfrigérant surchauffé en entrée du compresseur 3 et réchauffer le fluide caloporteur au niveau du condenseur bifluide 5. Le fluide réfrigérant ne circule ainsi pas dans l'évaporateur 11, par exemple du fait que le deuxième dispositif de détente 13 est fermé et bloque le fluide réfrigérant. Le fluide réfrigérant ne circule pas néanmoins dans la première branche de dérivation A2 du fait de la fermeture de sa vanne d'arrêt 23.

Le fluide réfrigérant surchauffé est dans un premier temps comprimé au niveau du compresseur 3 et passe par le condenseur bifluide 5 au niveau duquel il cède de l'énergie calorifique au fluide caloporteur. Le fluide réfrigérant passe ensuite dans le premier dispositif de détente 7 au niveau duquel il subit une première perte de pression. Le fluide réfrigérant traverse ensuite l'évapo-condenseur 9 en absorbant de l'énergie calorifique du flux d'air externe 200. Le fluide réfrigérant rejoint ensuite la troisième branche de dérivation A4 et le troisième dispositif de détente 18. La deuxième branche de dérivation A3 est bloquée du fait que sa vanne d'arrêt 24 est fermée. Au niveau du troisième dispositif de détente 18, le fluide réfrigérant subit une deuxième perte de pression et rejoint l'évaporateur bifluide 19 au niveau duquel il absorbe de l'énergie calorifique du fluide caloporteur. Le fluide réfrigérant rejoint ensuite le compresseur 3. Concernant le circuit de fluide caloporteur B, le fluide caloporteur est d'une part mis en mouvement par la deuxième pompe 45 afin de circuler dans la deuxième boucle B2. Le fluide caloporteur circule ainsi entre le condenseur bifluide 5 au niveau duquel il absorbe de l'énergie calorifique du fluide réfrigérant, l'élément électrique chauffant 47 qui réchauffe d'autant plus le fluide caloporteur et le troisième échangeur de chaleur au niveau duquel il cède de l'énergie calorifique afin de réchauffer le flux d'air interne 100. Le troisième dispositif de contrôle est configuré de sorte à permettre la circulation du fluide caloporteur dans l'élément électrique chauffant 47. Pour cela, sa première vanne d'arrêt 71 est ouverte et sa deuxième vanne d'arrêt 76 est fermée.

D'autre part, le fluide caloporteur est également mis en mouvement par la première pompe 41 et circule entre le deuxième échangeur de chaleur 43 et l'élément électrique chauffant 47. Le fluide caloporteur circule ainsi entre la première boucle B1 et la deuxième boucle B2 via la première C1 et la deuxième C2 conduite de dérivation. Le premier dispositif de contrôle est configuré de sorte à permettre le passage du fluide caloporteur entre la première B1 et la deuxième boucle B2. Pour cela sa première vanne d'arrêt 71 est fermée et sa deuxième vanne d'arrêt 73 est ouverte.

Le fluide caloporteur circule en outre dans la quatrième conduite de dérivation C4 afin de pouvoir échanger avec le fluide réfrigérant au niveau de l'évaporateur bifluide 19. Pour cela, la vannet d'arrêt 78 du deuxième dispositif de contrôle est ouverte.

Dans le cas où le circuit de fluide caloporteur B comporte une troisième conduite de dérivation C3, le fluide caloporteur peut circuler dans ladite troisième conduite de dérivation C3 si la troisième pompe 45 est en fonctionnement. Le fluide caloporteur peut alors absorber de l'énergie calorifique au niveau du quatrième échangeur de chaleur 44 et dissiper cette énergie calorifique au niveau du premier échangeur de chaleur 42.

Ce neuvième mode de fonctionnement permet notamment d'utiliser l'élément électrique chauffant 47 ainsi que l'évaporateur bifluide 19 afin de chauffer rapidement le fluide caloporteur afin de fournir une puissance de chauffage rapide au niveau du troisième échangeur de chaleur 48, notamment pour un dégivrage. Cela est de plus réalisé sans pour autant compromettre le refroidissement des batteries au niveau du deuxième échangeur de chaleur.

Ainsi, on voit bien que l'architecture du dispositif de gestion thermique 1 et notamment celle du circuit de fluide caloporteur B permet une bonne gestion thermique de la température des batteries aussi bien pour leur refroidissement que pour leur chauffage selon les besoins.

## Revendications

1. Dispositif de gestion thermique (1) d'un véhicule automobile électrique ou hybride, ledit dispositif de gestion thermique (1) comportant un circuit de fluide caloporteur (B) à l'intérieur duquel est destiné à circuler un fluide caloporteur, le circuit de fluide caloporteur (B) comportant :
▪ une première boucle (B1) comportant une première pompe (41), un premier échangeur de chaleur (42) destiné à être traversé par un flux d'air externe (200) et un deuxième échangeur de chaleur (43) disposé au niveau de batteries du véhicule automobile électrique ou hybride,
▪ une deuxième boucle (B2) comportant une deuxième pompe (46), un troisième échangeur de chaleur (48) destiné à être traversé par un flux d'air interne (100) et un élément électrique chauffant (47) du fluide caloporteur,
▪ une première conduite de dérivation (C1) reliant un premier point de raccordement (51) disposé en aval du deuxième échangeur de chaleur (43) avec un deuxième point de raccordement (52) disposé sur la deuxième boucle (B2) en amont de l'élément électrique chauffant(47), et
▪ une deuxième conduite de dérivation (C2) reliant un troisième point de raccordement (53) disposé sur la deuxième boucle (B2) en aval de l'élément électrique chauffant (47) avec un quatrième point de raccordement (54) disposé en amont du deuxième échangeur de chaleur (43),
la première pompe (41) étant disposée entre le quatrième (54) et le premier (51) point de raccordement et la deuxième pompe (46) étant disposée entre le troisième (53) et le deuxième (52) point de raccordement,
le circuit de fluide caloporteur (B) comportant en outre une quatrième conduite de dérivation (C4) reliant un septième point de raccordement (57) disposé sur la première boucle (B1) en aval du deuxième échangeur de chaleur (43) avec un huitième point de raccordement (58) disposé sur la première boucle (B1) en amont dudit deuxième échangeur de chaleur (43),
la première pompe (41) étant disposée entre le septième (57) et le huitième (58) point de raccordement,
le dispositif de gestion thermique comportant :
• un circuit de fluide réfrigérant (A) à l'intérieur duquel est destiné à circuler un fluide réfrigérant, le circuit de fluide réfrigérant (A) et le circuit de fluide caloporteur (B) étant en communication thermique au moyen d'un évaporateur bifluide (19) disposé conjointement sur le circuit de fluide réfrigérant (A) et sur le circuit de fluide caloporteur (B) au niveau la quatrième conduite de dérivation (C4),
• un condenseur bifluide (5) disposé conjointement sur le circuit de fluide réfrigérant (A) et sur le circuit de fluide caloporteur (B) au niveau la deuxième boucle (B2) entre le troisième échangeur de chaleur (48) et le deuxième point de raccordement (52),
le dispositif de gestion thermique (1) étant **caractérisé en ce que** le circuit de fluide caloporteur (B) comporte en outre :
• une cinquième conduite de dérivation (C5) reliant un neuvième point de raccordement (59) disposé sur la première boucle (B1) en aval du premier échangeur de chaleur (42) avec un dixième point de raccordement (60) disposé sur la deuxième boucle (B2) en aval du troisième échangeur de chaleur (48), et
• une sixième conduite de dérivation (C6) reliant un onzième point de raccordement (61) disposé sur la deuxième boucle (B2) entre le condenseur bifluide (5) et le deuxième point de raccordement (52) avec un douzième point de raccordement (62) disposé sur la première boucle (B1) entre le deuxième échangeur de chaleur (43) et le premier échangeur de chaleur (42).

2. Dispositif de gestion thermique (1) selon la revendication précédente, **caractérisé en ce que** le circuit de fluide caloporteur (B) comporte un premier dispositif de contrôle de circulation du fluide caloporteur de la première boucle (B1) vers la deuxième boucle (B2) via la première conduite de dérivation (C1).

3. Dispositif de gestion thermique (1) selon la revendication 1 ou 2, **caractérisé en ce que** le circuit de fluide caloporteur (B) comporte une troisième conduite de dérivation (C3) reliant un cinquième point de raccordement (55) disposé sur la première boucle (B1) en amont du quatrième point de raccordement (54) avec un sixième point de raccordement (56) disposé sur la première boucle (B1) en aval du premier point de raccordement (51), ladite troisième conduite de dérivation (C3) comportant un quatrième échangeur de chaleur (44) disposé au niveau d'éléments tels qu'un moteur électrique et/ou de l'électronique de puissance et une troisième pompe (45).

4. Dispositif de gestion thermique (1) selon l'une quelconque des revendications précédentes, **caractérisé en ce que** le circuit de fluide caloporteur (B) comporte un deuxième dispositif de contrôle de circulation du fluide caloporteur de la première boucle (B1) vers la quatrième conduite de dérivation (C4).

5. Dispositif de gestion thermique (1) selon l'une quelconque des revendications précédentes, **caractérisé en ce que** le circuit de fluide réfrigérant (A) est un circuit de climatisation inversible comportant un évaporateur (11) destiné à être traversé par un flux d'air interne (100) connecté en parallèle de l'évaporateur bifluide (19).

6. Dispositif de gestion thermique (1) selon l'une quelconque des revendications précédentes, **caractérisé en ce que** le circuit de fluide caloporteur (B) comporte un troisième dispositif de contrôle de circulation du fluide caloporteur de la deuxième boucle (B2) vers la première boucle (B1) via la sixième conduite de dérivation (C6).

## Patentansprüche

1. Wärmemanagementvorrichtung (1) eines Elektro- oder Hybridkraftfahrzeugs, wobei die Wärmemanagementvorrichtung (1) einen Wärmeträgerfluidkreislauf (B) umfasst, in dem ein Wärmeträgerfluid zu zirkulieren bestimmt ist, wobei der Wärmeträgerfluidkreislauf (B) umfasst:
• einen ersten Kreis (B1), umfassend eine erste Pumpe (41), einen ersten Wärmetauscher (42), der dazu bestimmt ist, von einem Außenluftstrom (200) durchströmt zu werden, und einen zweiten Wärmetauscher (43), der an Batterien des Elektro- oder Hybridkraftfahrzeugs angeordnet ist,
• einen zweiten Kreis (B2), umfassend eine zweite Pumpe (46), einen dritten Wärmetauscher (48), der dazu bestimmt ist, von einem Innenluftstrom (100) durchströmt zu werden, und ein elektrisches Heizelement (47) für das Wärmeträgerfluid,
• eine erste Bypassleitung (C1), die eine erste Anschlussstelle (51), die stromab des zweiten Wärmetauschers (43) angeordnet ist, mit einer zweiten Anschlussstelle (52), die in dem zweiten Kreis (B2) stromauf des elektrischen Heizelements (47) angeordnet ist, verbindet, und
• eine zweite Bypassleitung (C2), die eine dritte Anschlussstelle (53), die in dem zweiten Kreis (B2) stromab des elektrischen Heizelements (47) angeordnet ist, mit einer vierten Anschlussstelle (54), die stromauf des zweiten Wärmetauschers (43) angeordnet ist, verbindet,
wobei die erste Pumpe (41) zwischen der vierten (54) und der ersten (51) Anschlussstelle angeordnet ist und wobei die zweite Pumpe (46) zwischen der dritten (53) und der zweiten (52) Anschlussstelle angeordnet ist,
wobei der Wärmeträgerfluidkreislauf (B) ferner eine vierte Bypassleitung (C4) umfasst, die eine siebte Anschlussstelle (57), die in dem ersten Kreis (B1) stromab des zweiten Wärmetauschers (43) angeordnet ist, mit einer achten Anschlussstelle (58), die in dem ersten Kreis (B1) stromauf des zweiten Wärmetauschers (43) angeordnet ist, verbindet,
wobei die erste Pumpe (41) zwischen der siebten (57) und der achten (58) Anschlussstelle angeordnet ist,
wobei die Wärmemanagementvorrichtung umfasst:
• einen Kältemittelkreislauf (A), in dem ein Kältemittel zu zirkulieren bestimmt ist, wobei der Kältemittelkreislauf (A) und der Wärmeträgerfluidkreislauf (B) mittels eines Doppelfluid-Verdampfers (19), der sowohl in dem Kältemittelkreislauf (A) als auch in dem Wärmeträgerfluidkreislauf (B) an der vierten Bypassleitung (C4) angeordnet ist, in thermischer Verbindung stehen,
• einen Doppelfluid-Kondensator (5), der sowohl in dem Kältemittelkreislauf (A) als auch in dem Wärmeträgerfluidkreislauf (B) im an dem zweiten Kreis (B2) zwischen dem dritten Wärmetauscher (48) und der zweiten Anschlussstelle (52) angeordnet ist,
wobei die Wärmemanagementvorrichtung (1) **dadurch gekennzeichnet ist, dass** der Wärmeträgerfluidkreislauf (B) ferner umfasst:
• eine fünfte Bypassleitung (C5), die eine neunte Anschlussstelle (59), die in dem ersten Kreis (B1) stromab des ersten Wärmetauschers (42) angeordnet ist, mit einer zehnten Anschlussstelle (60), die in dem zweiten Kreis (B2) stromab des dritten Wärmetauschers (48) angeordnet ist, verbindet, und
• eine sechste Bypassleitung (C6), die eine elfte Anschlussstelle (61), die in dem zweiten Kreis (B2) zwischen dem Doppelfluid-Kondensator (5) und der zweiten Anschlussstelle (52) angeordnet ist, mit einer zwölften Anschlussstelle (62), die in dem ersten Kreis (B1) zwischen dem zweiten Wärmetauscher (43) und dem ersten Wärmetauscher (42) angeordnet ist, verbindet.

2. Wärmemanagementvorrichtung (1) nach dem vorhergehenden Anspruch, **dadurch gekennzeichnet, dass** der Wärmeträgerfluidkreislauf (B) eine erste Vorrichtung zur Überwachung der Zirkulation des Wärmeträgerfluids von dem ersten Kreis (B1) zu dem zweiten Kreis (B2) über die erste Bypassleitung (C1) umfasst.

3. Wärmemanagementvorrichtung (1) nach Anspruch 1 oder 2, **dadurch gekennzeichnet, dass** der Wärmeträgerfluidkreislauf (B) eine dritte Bypassleitung (C3) umfasst, die eine fünfte Anschlussstelle (55), die in dem ersten Kreis (B1) stromauf der vierten Anschlussstelle (54) angeordnet ist, mit einer sechsten Anschlussstelle (56), die in dem ersten Kreis (B1) stromab der ersten Anschlussstelle (51) angeordnet ist, verbindet, wobei die dritte Bypassleitung (C3) einen vierten Wärmetauscher (44), der an Elementen wie einem Elektromotor und/oder der Leistungselektronik angeordnet ist, und eine dritte Pumpe umfasst (45).

4. Wärmemanagementvorrichtung (1) nach einem der vorhergehenden Ansprüche, **dadurch gekennzeichnet, dass** der Wärmeträgerfluidkreislauf (B) eine zweite Vorrichtung zur Überwachung der Zirkulation des Wärmeträgerfluids von dem ersten Kreis (B1) zu der vierten Bypassleitung (C4) umfasst.

5. Wärmemanagementvorrichtung (1) nach einem der vorhergehenden Ansprüche, **dadurch gekennzeichnet, dass** der Kältemittelkreislauf (A) ein reversibler Klimaanlagenkreislauf ist, der einen Verdampfer (11) umfasst, der dazu bestimmt ist, von einem Innenluftstrom (100) durchströmt zu werden und der parallel zu dem Doppelfluid-Verdampfer (19) angeschlossen ist.

6. Wärmemanagementvorrichtung (1) nach einem der vorhergehenden Ansprüche, **dadurch gekennzeichnet, dass** der Wärmeträgerfluidkreislauf (B) eine dritte Vorrichtung zur Überwachung der Zirkulation des Wärmeträgerfluids von dem zweiten Kreis (B2) zu dem ersten Kreis (B1) über die sechste Bypassleitung (C6) umfasst.

## Claims

1. Thermal management device (1) for an electric or hybrid motor vehicle, said thermal management device (1) comprising a heat-transfer fluid circuit (B) inside which a heat-transfer fluid is intended to circulate, the heat-transfer fluid circuit (B) comprising:
• a first loop (B1) comprising a first pump (41), a first heat exchanger (42) intended to have an external-air flow (200) passing through it, and a second heat exchanger (43) placed in the region of the batteries of the electric or hybrid motor vehicle,
• a second loop (B2) comprising a second pump (46), a third heat exchanger (48) intended to have an internal-air flow (100) passing through it, and an electric heating element (47) for heating the heat-transfer fluid,
• a first bypass pipe (C1) connecting a first connecting point (51) located downstream of the second heat exchanger (43) to a second connecting point (52) positioned on the second loop (B2) upstream of the electric heating element (47), and
• a second bypass pipe (C2) connecting a third connecting point (53) located on the second loop (B2) downstream of the electric heating element (47) to a fourth connecting point (54) positioned upstream of the second heat exchanger (43),
the first pump (41) being positioned between the fourth (54) and the first (51) connecting point, and the second pump (46) being positioned between the third (53) and the second (52) connecting point,
the heat-transfer fluid circuit (B) further comprising a fourth bypass pipe (C4) connecting a seventh connecting point (57), positioned on the first loop (B1) downstream of the second heat exchanger (43), to an eighth connecting point (58) positioned on the first loop (B1) upstream of said second heat exchanger (43),
the first pump (41) being positioned between the seventh (57) and the eighth (58) connecting point,
the thermal management device comprising:
• a refrigerant circuit (A) in which a refrigerant fluid is intended to circulate, the refrigerant circuit (A) and the heat-transfer fluid circuit (B) being in thermal communication by means of a two-fluid evaporator (19) positioned jointly on the refrigerant circuit (A) and on the heat-transfer fluid circuit (B) on the fourth bypass pipe (C4),
• a two-fluid condenser (5) positioned jointly on the refrigerant circuit (A) and on the heat-transfer fluid circuit (B) on the second loop (B2) between the third heat exchanger (48) and the second connecting point (52), the thermal management device (1) being **characterized in that** the heat-transfer fluid circuit (B) further comprises:
• a fifth bypass pipe (C5) connecting a ninth connecting point (59) located on the first loop (B1) downstream of the first heat exchanger (42) to a tenth connecting point (60) positioned on the second loop (B2) downstream of the third heat exchanger (48), and
• a sixth bypass pipe (C6) connecting an eleventh connecting point (61) located on the second loop (B2) between the two-fluid condenser (5) and the second connecting point (52) to a twelfth connecting point (62) positioned on the first loop (B1) between the second heat exchanger (43) and the first heat exchanger (42).

2. Thermal management device (1) according to the preceding claim, **characterized in that** the heat-transfer fluid circuit (B) comprises a first control device controlling the circulation of the heat-transfer fluid from the first loop (B1) toward the second loop (B2) via the first bypass pipe (C1).

3. Thermal management device (1) according to Claim 1 or 2, **characterized in that** the heat-transfer fluid circuit (B) comprises a third bypass pipe (C3) connecting a fifth connecting point (55), positioned on the first loop (B1) upstream of the fourth connecting point (54), to a sixth connecting point (56) positioned on the first loop (B1) downstream of the first connecting point (51), said third bypass pipe (C3) comprising a fourth heat exchanger (44) positioned in the region of elements such as an electric motor and/or of the power electronics and a third pump (45).

4. Thermal management device (1) according to any one of the preceding claims, **characterized in that** the heat-transfer fluid circuit (B) comprises a second control device controlling the circulation of the heat-transfer fluid from the first loop (B1) toward the fourth bypass pipe (C4).

5. Thermal management device (1) according to any one of the preceding claims, **characterized in that** the refrigerant circuit (A) is a reversible air conditioning circuit comprising an evaporator (11) through which an internal-air flow (100) is intended to pass and connected in parallel with the two-fluid evaporator (19).

6. Thermal management device (1) according to any one of the preceding claims, **characterized in that** the heat-transfer fluid circuit (B) comprises a third control device controlling the circulation of the heat-transfer fluid from the second loop (B2) toward the first loop (B1) via the sixth bypass pipe (C6).
